# NEUE EUROPÄISCHE PATENTSCHRIFT

(11) **EP 0 386 517 B2**
(45) Veröffentlichungstag und Bekanntmachung des Hinweises auf die Entscheidung über den Einspruch: **19.05.1999**
(45) Hinweis auf die Patenterteilung: 06.10.1993
(21) Anmeldenummer: 90103216.9
(22) Anmeldetag: 20.02.1990
(51) Int. Cl.: F16L 55/033, F16L 9/133

(54) **Rohrleitung**
Conduit
Conduit

(30) Priorität: 04.03.1989 DE 3907106
(43) Veröffentlichungstag der Anmeldung: 12.09.1990
(73) Patentinhaber: Friatec Aktiengesellschaft, 68229 Mannheim (DE)
(72) Erfinder: Stahnke, Bernd-Rüdiger, Dipl.-Ing., D-6940 Weinheim (DE)
(74) Vertreter: Klose, Hans, Dipl.-Phys.

(56) Entgegenhaltungen:
- EP-A- 0 095 582
- EP-A- 0 163 571
- EP-A- 0 254 375
- DE-A- 2 404 293
- DE-A- 2 714 576
- DE-A- 3 102 350
- DE-A- 3 714 592
- DE-A- 3 725 147
- GB-A- 1 277 613
- NO-A- 90 847

## Beschreibung

Die Erfindung bezieht sich auf ein Rohr aus Kunststoff gemäß den im Oberbegriff des Patentanspruchs 1 angegebenen Merkmalen.

Aus der DE-A-31 02 350 ist ein derartiges Rohr bekannt, welche mehrlagig aus thermoplastischem Kunststoff hergestellt ist, wobei die einzelnen Lagen im Wege des Strangpressens gleichzeitig erzeugt, aufeinander geführt und vereinigt sind. Hierbei besteht die Außenlage aus jungfräulichem Polyvinylchlorid, während das Innenrohr aus regeneriertem Polyvinylchlorid besteht. Hierdurch soll erreicht werden, daß die in der Praxis als Abfall anfallenden erheblichen Polyvinylchloridmengen nicht mehr vernichtet werden müssen, sondern als regeneriertes Polyvinylchlorid wieder verarbeitet werden können. Durch die Ausbildung des Außenmantels aus jungfräulichem Polyvinylchlorid soll die Oualitätsminderung des regenerierten Polyvinylchlorids in bezug auf Festigkeitsverhalten und Stabiltätsverhalten ausgeglichen werden. Die vorbekannte Rohrleitung kann zwar Vorteile hinsichtlich Abfallbeseitigung bzw. Recycling von Kunststoffen ergeben, jedoch resultieren hieraus keine Wirkungen im Hinblick auf Schalleitung oder Schallübertragung.

Ferner ist aus der EP-A-0254 375 ein Kunststoffrohr aus thermoplastischem Material bekannt, welches aus Gründen des Schalltschutzes ein Flächengewicht von wenigstens 8kg/m² aufweist. Dieses Flächengewicht wird durch Zugabe eines Zuschlagsstoffes hoher Dichte erreicht, wobei vorzugsweise Bariumsulfat vorgesehen ist. Hierbei liegt die Dichte des Kunststoffes im Bereich zwischen 1,4 und 2,7. Dieses einlagige Kunststoffrohr ist im Vergleich mit einem herkömmlichen Kunststoffrohr, beispielsweise nach DIN 19561, erheblich schwerer. Hierdurch ergibt sich ein zusätzlicher Aufwand vor ailem beim Transport und bei der Handhabung während der Montage auf einer Baustelle. Es sei festgehalten, daß in den letzten Jahren die früher im breiten Umfange zur Abwasserinstallation eingesetzten Gußrohre im starken Maße durch die erheblich leichteren Kunststoffrohre ersetzt wurden, welche ein nicht unerheblich reduziertes Schallübertragungsverhalten aufwiesen. Die EP-A-254 375 vermittelt lediglich die Lehre, die Dichte des Kunststoffrohres insgesamt, wie es bereits bei den Gußrohren der Fall war, zu erhöhen.

Rohrleitungen der genannten Art dienen vor allem als Fördersystem für Flüssigkeiten und gelangen insbesondere im Bauwesen als Abwasserleitungen zum Einsatz. Als Herstellverfahren haben sich als besonders zweckmäßig Extrusionsverfahren oder Strangspritzverfahren herausgestellt, um die regelmäßig aus einem thermoplastischen Kunststoff bestehenden Rohrleitungen wirtschaftlich fertigen zu können. Als Kunststoffe gelangen heute überwiegend Polyvinylchlorid (PVC) oder Acrylnitril-Butadien-Styrol (ABS) zum Einsatz. Die Schallübertragung und Schallabstrahlung einer solchen Rohrleitung ist im Vergleich mit einer Rohrleitung aus Gußeisen keineswegs günstig zu beurteilen. Die bisher zum Zwecke der Schallisolation vorgeschlagenen Maßnahmen bestanden im wesentlichen darin, die Rohrleitungen nach der Montage mit Dämmaterial, beispielsweise Steinwolle oder Glaswolle, zu umgeben und Schallbrücken zum Mauerwerk zu vermeiden. Derartige Maßnahmen sind recht arbeitsaufwendig und müssen mit großer Sorgfalt durchgeführt werden, zumal bereits eine einzige Schallbrücke bei einem sich über mehrere Stockwerke erstreckenden Rohrleitungssystem insgesamt äußerst nachteilige Folgen hinsichtlich der Schallübertragung hat.

Hiervon ausgehend liegt der Erfindung die Aufgabe zugrunde, das Rohr der genannten Art dahingehend auszubilden, daß die Schalleitung und Schallübertragung bei geringem Gewicht effektiv reduziert wird. Im Vergleich zu bekannten Rohren soll der Montageaufwand zumindest nicht größer sein, wobei zusätzliche Maßnahmen auf der Baustelle möglichst unterbleiben sollen. Die Bearbeitung und Handhabung, insbesondere vor Ort auf der Baustelle, soll nicht durch zusätzliche Maßnahmen erschwert werden.

Zur Lösung dieser Aufgabe werden die im Kennzeichen des Patentanspruchs 1 angegebenen Merkmale vorgeschlagen.

Das erfindungsgemäße Rohrzeichnet sich durch eine zuverlässige und funktionssichere Konstruktion aus und weist bei geringem Gewicht eine reduzierte Schalleitung und Schallübertragung im Vergleich mit Rohren aus den bisher zum Einsatz gelangenden Kunststoffen. Die Innenschicht besteht aus einem bekannten und den Prüfvorschriften für das jeweilige Fördermedium genügenden Kunststoff. Hingegen besteht die Außenschicht aus einem Werkstoff, der im Vergleich zu dem Werkstoff der Innenschicht eine wesentlich höhere Dichte aufweist. Die Außenschicht dient als Schallschutzmantel, in welchem Körper- und Mediumschall gedämpft werden. Im Inneren des Rohres vorhandene oder beispielsweise an Aufprallstellen oder Krümmungen entstehende Schallwellen werden an der Außenschicht gebrochen und/oder reflektiert und dringen somit nur in einem nicht unerheblichen Maße reduziert nach außen. Es ist für die Innenschicht und die Außenschicht der gleiche termoplastische Kunstoff vorzusehen, wobei jedoch dem Kunststoff für die Außenschicht ein Füllstoff zur Erhöhung der Dichte beigegeben wird. Die Wärmedehnungsverhalten von Innenschicht und Außenschicht entsprechen daher einander, und es sind keine Probleme durch Ablösen der Außenschicht von der Innenschicht zu befürchten. Dies ist besonders wichtig im Hinblick auf die geforderte lange Lebensdauer von Rohrleitungen, die im Bauwesen zum Einsatz gelangen. Die Innenschicht und die Außenschicht bilden eine integrale Einheit, welche den betrieblichen Anforderungen in hoher Maße gerecht wird, die bisher nachteiligen Effekte von Kunststoffrohren weitgehend vermeidet und sich durch eine hohe Lebensdauer und Beständigkeit aus zeichnet. Die Anforderungen zum Schallschutz werden in optimaler Weise erfüllt.

Die Wandstärke der Innenschicht ist kleiner ausgebildet als die Wandstärke der Außenschicht . Als zweckmäßig hat sich ein Verhältnis der Wandstärke der Innenschicht zur Wandstärke der Außenschicht im Bereich von 2:3 erwiesen. Aufgrund der größeren Wandstärke der Außenschicht wird eine optimale Schalldämmung erzielt und andererseits werden aber auch die hinsichtlich der chemischen und/oder physikalischen Beständigkeit geltenden Forderungen durch die Innenschicht gleichermaßen erfüllt.

Gemäß einer besonders zweckmäßigen Ausgestaltung erfolgt die Verbindung zweier Rohre eines Rohrleitungssystems mittels einer Muffe, welche wenigstens zwei Sicken zur Aufnahme von Dichtringen enthält, um eine direkte Schallübertragung des einen Rohres auf die Muffe bzw. das nächstfolgende Rohr zu verhindern. Die Kombination der zweischaligen Rohrleitung mit einer Kunststoffinnenschicht und einer schalldämmenden Außenschicht hoher Dichte zusammen mit der Muffe ergibt eine wesentliche Verminderung der Schallausbreitung über das Rohrleitungssystem. Um ferner eine Schallübertragung über die Stirnflächen der zu verbindenden Rohre zu verhindern, weist die Muffe ferner eine U-förmige Nut auf, in welcher das in die Muffe eingeführte Rohr mit seinem Spitzende eingreift.

Diese Nut ist mit einem Elastomer oder einem geeigneten Dichtungsring oder dergleichen ausgefüllt und das in die Muffe eingeführte Rohr liegt mit seiner Stirnfläche an diesem Elastomer oder dergleichen an, ohne den Kunststoff der Muffe selbst zu berühren. Eine Schallbrücke infolge einer unmittelbaren Anlage des Rohres an einem Wandteil der Muffe wird auf diese besonders zweckmäßige Weise verhindert.

Weiterbildungen und zweckmäßige Ausgestaltungen der Erfindung ergeben sich aus den Unteransprüchen.

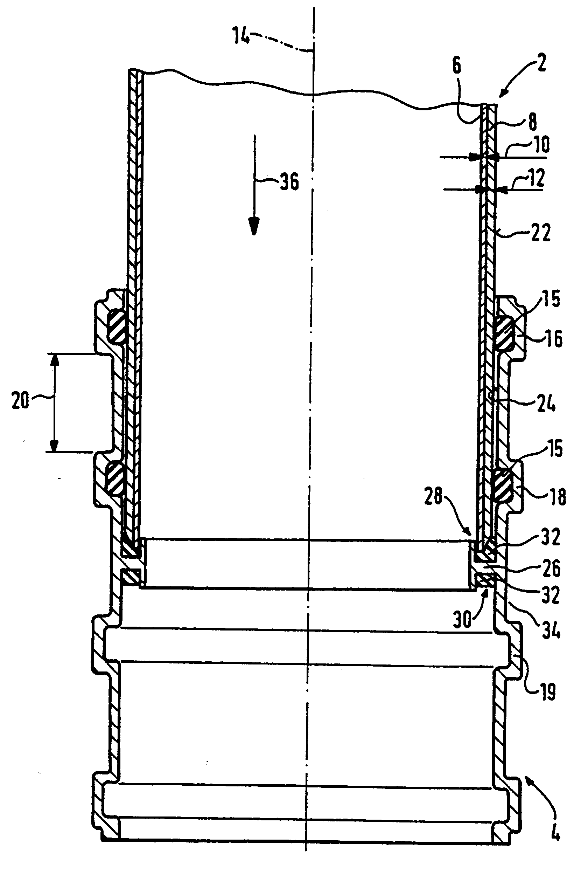

Eines besonderes Ausführungsbeispiel wird nachfolgend anhand der Zeichnung näher erläutert:

In der Zeichnung ist schematisch ein Ende eines Rohres 2 dargestellt, das in eine Doppelmuffe 4 eingeschoben ist. Es versteht sich, daß von der anderen Seite her in die Doppelmuffe ein weiteres Rohrende einschiebbar ist. Desweiteren kann die eine Hälfte der Doppelmuffe auch Bestandteil eines Rohrendes, Fittings, einer Armatur oder dergleichen sein.

Das Rohr 2 besteht aus einer Innenschicht 6 und einer diese Innenschicht 6 umgebenden Außenschicht 8. Die Innenschicht 6 weist eine Wandstärke 10 auf und die Außenschicht 8 weist eine Wandstärke 12 auf. Die Wandstärke 12 der Außenschicht 8 ist wesentlich größer als die Wandstärke 10 der Innenschicht 6, wobei sich ein Wandstärkenverhältnis von 3:2 als besonders zweckmäßig erwiesen hat. Für die üblichen Rohrabmessungen, welche in den Normen DIN 19560 sowie DIN 19561 für verschiedene Rohrnennweiten festgelegt sind, liegt die gesamte Wandstärke im Bereich zwischen 3,2 bis 5,3 mm, wobei die für Kunststoffrohre üblichen Toleranzbereiche hinzulommen. Von besonderer Bedeutung ist ferner, daß die Außenschicht 8 aus einem Werkstoff besteht, der eine größere Dichte aufweist als der der Innenschicht 6. Die Innenschicht 6 und die Außenschicht 8 bestehen grundsätzlich aus dem gleichen Kunststoff, doch ist dem Kunststoff der Außenschicht 8 ein Zuschlagstoff mit einem hohen spezifischen Gewicht beigegeben. Als Zuschlagstoff kann vor allem Bariumsulfat zum Einsatz gelangen, das ein spezifisches Gewicht von 4,3 g/cm³ besitzt. Im Rahmen der Erfindung können auch andere Zusatzstoffe oder Gemische hiervon zum Einsatz gelangen. Maßgebend ist in allen Fällen, daß der Zuschlagstoff ein im Vergleich zu dem Kunststoff ein wesentlich größeres spezifisches Gewicht aufweist. Die Dichte der Außenschicht liegt im Bereich zwischen 1,4 bis 2,8, während die Dichte der Innenschicht im Bereich zwischen 1,1 bis 1,4 liegt. Das derart ausgebildete doppelwandige Rohr läßt sich gleicherweise wie bisher übliche einwandige Rohre verarbeiten, so daß keine besonderen Maßnahmen bei der Verlegung und Montage sich ergeben. So kann das Rohr bei Bedarf problemlos auf die gewünschte Länge abgeschnitten werden, ohne daß hierbei die homogene Verbindung zwischen der Innenschicht und der Außenschicht in irgendeiner Weise gestört würde. Der Kunststoff der Innenschicht und der Kunststoff der Außenschicht sind bei der Herstellung eine quasi untrennbare integrale Verbindung eingegangen.

Die Doppelmuffe 4 weist in jeder Hälfte zwei in Richtung der Längsachse 14 beabstandet angeordnete Sicken 16, 18 auf. In diesen Sicken sind Dichtungsringe 15 angeordnet, die als Lippendichtungen, Luftpolsterprofile, Hohlprofile oder dergleichen ausgebildet sein können. Aufgrund des axialen Abstandes 20 der genannten Sicken 16, 18 wird eine unmittelbare Anlage der Rohraußenwand 22 an der Muffeninnenwand 24 vermieden. Desweiteren ist in der Mitte der Doppelmuffe 4 ein im Querschnitt T-förmiger Steg 26 angeordnet. Wie ersichtlich, sind damit zwei Ringnuten 28, 30 geschaffen, in welche die Rohre jeweils mit ihren Enden eingreifen können. Die Ringnuten 28, 30 sind zum jeweiligen Muffenende hin geöffnet und enthalten schalldämmendes Material 32, das als ein Ring aus Moosgummi, Profilgummi oder dergleichen ausgebildet ist. Auch in axialer Richtung ist damit eine unmittelbare Anlage des in die Muffe eingeschobenen Rohres 2 an derselben unterbunden. Damit ist in besonders zweckmäßiger Weise sowohl in Richtung der Längsachse 14 mittels des Materials 32 als auch in radialer Richtung mittels der Dichtungsringe 15 eine wirkungsvolle Abkopplung der Rohrleitungsteie erreicht, wodurch die Schallübertragung in erheblichem Maße reduziert wird.

Geht man einmal davon aus, daß die Doppelmuffe 4 in der dargestellten Weise vertikal montiert und das Rohr 2 von Abwasser vertikal nach unten des Pfeiles 36 durchflossen wird, so besteht grundsätzlich das Problem, daß Schmutz in die gegen die Strömungsrichtung offene Ringnut 28 gelangt. Durch das Material 32, welches zweckmäßig aus einem Elastomer besteht, wird verhindert, daß Schmutzkörper, Sand oder dergleichen in den Bereich der Sicke 18 gelangen und der Dichtring beschädigt wird. Es darf angemerkt werden, daß durch Längenänderungen infolge von Temperatureinflüssen das Rohr 2 relativ zur festgelegten Doppelmuffe 4 sich axial bewegt; infolgedessen sind Schmirgeleffekte im Bereich der Sicke 18 und des dort vorhandenen Dichtringes grundsätzlich zu befürchten. Mittels des Steges 26 und des darin befindlichen Materials 32, das in axialer Richtung kompressibel ist und immer eine zuverlässige Abdichtung im Bereich der axialen Stirnfläche des Rohres 2 gewährleistet, werden diese nachteiligen Effekte zuverlässig unterbunden.

Infolge der beiden mittleren Sicken 18, 19 ist an der Außenfläche der Doppelmuffe eine Ringkammer 34 vorhanden. Diese Ringkammer 34 wird bevorzugt zur Montage einer Rohrschelle oder dergleichen genutzt, mittels welcher die Doppelmuffe 4 am Bauwerk festgelegt wird. Die Doppelmuffe 4 kann damit als Fixpunkt beim Verlegen der Rohrleitung genutzt werden, ohne daß insoweit zusätzliche Maßnahmen an der Doppelmuffe erforderlich würden. Der axiale Abstand der beiden mittleren Sicken 18, 19 wir unter Berücksichtigung dieser Maßgabe vorgegeben.

## Patentansprüche

1. Rohr für Flüssigkeiten, insbesondere für Abwasser, aus Kunststoff, bestehend aus einer Innenschicht (6) und einer die Innenschicht (6) umgebenden Außenschicht (8), welche durch Coextrusion hergestellt sind und eine integrale Einheit bilden, wobei die Innenschicht (6) aus dem gleichen Kunststoff wie die Außenschicht (8) besteht und eine Dichte im Bereich von 1,1 bis 1,4 aufweist,
dadurch gekennzeichnet,
daß die Dichte der Außenschicht (8) größer ist als die Dichte der Innenschicht (6) und im Bereich von 1,4 bis 2,8 groß ist,
daß die Außenschicht (8) einen Zuschlagsstoff mit einem im Vergleich zum Kunststoff wesentlich höheren spezifischen Gewicht enthält und
daß die Wandstärke (12) der Außenschicht (8) größer ist als die Wandstärke (10) der Innenschicht (6).

2. Rohr nach Anspruch 1, dadurch gekennzeichnet, daß die Außenschicht (8) als Zuschlagstoff Bariumsulfat oder ein Gemisch hiervon enthält.

3. Rohr nach Anspruch 1 oder 2, dadurch gekennzeichnet, daß die Wandstärke (12) der Außenschicht (8) um einen Faktor zwischen 1,25 und 1,75, bevorzugt um den Faktor 1,5 größer ist als die Wandstärke (10) der Innenschicht (6).

4. Rohr nach einem der Ansprüche 1 bis 3, dadurch gekennzeichnet, daß die Dichte der Außenschicht (8) im Bereich zwischen 1,8 bis 2,2, liegt.

5. Rohrleitung, mit einem Rohr nach einem der Ansprüche 1 bis 4, wobei mit einer Muffe die Verbindung zwischen zwei derartigen Rohren hergestellt ist, dadurch gekennzeichnet, daß die Muffe in ihrer Innenwand (24) zwei in Richtung der Längsachse (14) beabstandet angeordnete Sicken (16, 18) zurAufnahme je eines Dichtungsringes (15) aufweist und ferner eine zum Muffenende offene Ringnut (28) enthält, in welcher ein Ring aus einem elastischen Material (32) angeordnet ist und in welche das Rohr (2) mit seinem Ende eingreift.

6. Rohrleitung nach Anspruch 5, dadurch gekennzeichnet, daß die Muffe als eine Doppelmuffe (4) ausgebildet ist und in der Mitte einen T-förmigen Steg (26) aufweist, der zwei zum jeweiligen Muffenende sich öffnende Ringnuten (28, 30) bildet.

7. Rohrleitung nach Anspruch 6, dadurch gekennzeichnet, daß die insgesamt vier Sicken der Doppelmuffe (4) im wesentlichen äquidistant angeordnet sind, wobei eine zwischen den beiden mittleren Sicken (18, 19) an derAußenwand der Doppelmuffe vorhandene Kammer (34) zur Festlegung einer Rohrschelle oder dergleichen dient.

## Claims

1. Pipe for liquids, in particular for waste water, of plastics material, consisting of an inner layer (6) and an outer layer (8) which surrounds the inner layer (6), the inner layer (6) and the outer layer (8) being produced by co-extrusion and forming an integral unit, the inner layer (6) consisting of the same plastics material as the outer layer (8) and having a density in the range 1.1 to 1.4, characterised in that
the density of the outer layer (8) is greater than the density of the inner layer (6) and is in the range 1.4 to 2.8,
the outer layer (8) contains an additive with a substantially higher specific weight than the plastics material, and
the wall thickness (12) of the outer layer (8) is greater than the wall thickness (10) of the inner layer (6).

2. Pipe according to Claim 1, characterised in that the outer layer (8) contains barium sulphate or a mixture thereof as additive.

3. Pipe according to Claim 1 or Claim 2, characterised in that the wall thickness (12) of the outer layer (8) is greater than the wall thickness (10) of the inner layer (6) by a factor of between 1.25 and 1.75, preferably by a factor of 1.5.

4. Pipe according to one of Claims 1 to 3, characterised in that the density of the outer layer (8) is in the range of 1.8 to 2.2.

5. Conduit with a pipe according to one of Claims 1 to 4, whereby the connection between two such pipes is made with a sleeve, characterised in that the sleeve is provided on its internal wall (24) with two grooves (16, 18) which are separated in the direction of the longitudinal axis (14) and which each receive a sealing ring (15), and is further provided with an annular groove (28) which is open towards the sleeve end, in which annular groove a ring of elastic material (32) is arranged and into which the end of the pipe (2) extends.

6. Conduit according to Claim 5, characterised in that the sleeve is formed as a double sleeve (4) and is provided centrally with a T-shaped projection (26), which forms two annular grooves (28, 30) which are open towards the respective ends of the sleeve.

7. Conduit according to Claim 6, characterised in that the total of four grooves on the double sleeve (4) are arranged substantially equidistantly, whereby a chamber (34) present on the outer wall of the double sleeve between the two central grooves (18, 19) serves for fixing of a pipe clamp or the like.

## Revendications

1. Tube pour liquides, notamment pour eaux usées, en matière plastique, composé d'une couche intérieure (6) et d'une couche extérieure (8) qui entoure la couche intérieure (6), lesquelles couches sont fabriquées par coextrusion et forment une unité d'un seul tenant, la couche intérieure (6) étant faite de la même matière plastique que la couche extérieure (8) et présentant une densité dans l'intervalle allant de 1,1 à 1,4, ***caractérisé***
***en ce que*** la densité de la couche extérieure (8) est plus grande que la densité de la couche intérieure (6) et est comprise dans l'intervalle allant de 1,4 à 2,8,
***en ce que*** la couche extérieure (8) contient une matière de charge possédant un poids spécifique sensiblement supérieur à celui de la matière plastique, et
***en ce que*** l'épaisseur de paroi (12) de la couche extérieure (8) est supérieure à l'épaisseur de paroi de la couche intérieure (6).

2. Tube selon la Revendication 1, ***caractérisé en ce que*** la couche extérieure (8) contient, comme matière de charge, du sulfate de baryum ou un mélange à base de cette substance.

3. Tube selon la Revendication 1 ou 2, ***caractérisé en ce que*** l'épaisseur de paroi (12) de la couche extérieure (8) est supérieure à l'épaisseur de paroi (10) de la couche intérieure (6), de préférence d'un facteur compris en 1,25 et 1,75, de préférence du facteur 1,5.

4. Tube selon l'une quelconque des Revendications 1 à 3, ***caractérisé en ce que*** la densité de la couche extérieure (8) est dans l'intervalle allant de 1,8 à 2,2.

5. Conduite tubulaire comprenant un tube selon l'une quelconque des Revendications 1 à 4, dans laquelle le raccordement entre deux tubes de ce genre est réalisé au moyen d'un manchon, ***caractérisée en ce*** que le manchon présente, dans sa paroi intérieure (24), deux moulures (16, 18) espacées l'une de l'autre selon la direction de l'axe longitudinal (14) et destinées à recevoir chacune une bague d'étanchéité (15), et renferme en outre une gorge annulaire (28) qui s'ouvre vers l'extrémité du manchon, dans laquelle est disposée une bague faite d'une matière élastique (32) et dans laquelle le tube (2) est engagé par son extrémité.

6. Conduite tubulaire selon la Revendication 5, ***caractérisée en ce que*** le manchon est constitué par un manchon double (4) et présente, en son milieu, une nervure (26) à profil de T qui forme deux gorges annulaires (28, 30) qui s'ouvrent chacune vers l'extrémité correspondante du manchon.

7. Conduite tubulaire selon la Revendication 6, ***caractérisée en ce que*** les moulures du manchon double (4), qui sont au total au nombre de quatre, sont sensiblement équidistantes, une chambre (34) située entre les deux moulures centrales (18, 19) de la paroi extérieure du double manchon servant à la fixation d'un collier de tube ou équivalent.
